# EUROPEAN PATENT APPLICATION

(11) **EP 2 738 359 A1**
(43) Date of publication of application: **04.06.2014**
(21) Application number: 13193190.9
(22) Date of filing: 15.11.2013
(51) Int. Cl.: F01D 11/00

(54) **System and method for sealing a gas path in a turbine**

(30) Priority: 30.11.2012 US 201213690485
(71) Applicant: General Electric Company, Schenectady, New York 12345 (US)
(72) Inventor: Weber, David Wayne, Greenville, SC South Carolina 29615 (US); Kirtley, Kevin Richard, Greenville, SC South Carolina 29615 (US); Morgan, Victor John, Greenville, SC South Carolina 29615 (US); Sarawate, Neelesh Nandkumar, Niskayuna, NY New York 12309 (US)
(74) Representative: Cleary, Fidelma

(57) **Abstract**

A seal 10 for placement in a slot 18 between two turbine components 20 of a gas turbine 110 to seal a gap 19 between the components may include a sealing element 14 sized so as to be capable of placement within the slot 18 and of substantially sealing the gap 19 during operation of the gas turbine 110. A sacrificial coating 16 may be located on the sealing element 14. The sacrificial coating 16 may be configured with a size substantially conforming to a size of the slot 18, the sacrificial coating 16 including a material that is removable from the sealing element 14 via heating to a temperature achieved during operation of the gas turbine 110. Related gas turbine assemblies and methods of assembly are also disclosed.

## Description

The subject matter disclosed herein relates generally to a system and method for sealing a gas path in a turbine. In particular embodiments, a sacrificial material may be included the systems and/or methods for sealing the gas path.

Gas turbines are widely used in industrial and commercial operations. For example, industrial gas turbines typically include one or more combustors to generate power or thrust. A typical commercial gas turbine used to generate electrical power includes a compressor at the front, one or more combustors around the middle, and a turbine at the rear. Ambient air enters the compressor as a working fluid, and alternating stages of stator vanes and rotating blades progressively impart kinetic energy to the working fluid to produce a compressed working fluid, as is known in the art. The compressed working fluid exits the compressor and flows to the combustors where it mixes with fuel and ignites to generate combustion gases having a high temperature and pressure. The combustion gases flow to the turbine where alternating stages of stator vanes and rotating blades redirect and expand the combustion gases to produce work. For example, expansion of the combustion gases in the turbine may rotate a shaft connected to a generator to produce electricity.

Compressed working fluid that leaks around or bypasses the stator vanes or rotating blades in the compressor reduces the efficiency and/or output of the compressor. Similarly, combustion gases that leak around or bypass the stator vanes or rotating blades in the turbine reduce the efficiency and/or output of the turbine. As a result, various systems and methods have been developed to reduce the amount of fluid or gases that may bypass components in the gas turbine. For example, strip seals seated in slots between adjacent components may reduce the amount of fluids and gases that bypass the stationary vanes and rotating blades in the gas turbine. In some applications, the strip seals may be relatively hard and thick, while in other applications, the strip seals may be thinner and flexible. The harder and thicker strip seals generally enhance alignment between larger adjacent components without damaging the strip seals, but may result in increased leakage. In contrast, the thinner and flexible strip seals result in reduced leakage, but are more susceptible to damage during installation. Accordingly, an improved system and method for sealing the gas path in the turbine that addresses one or more of the identified issues would be useful.

Various aspects and advantages of the invention will be set forth in part in the following description, or may be clear from the description, or may be learned through practice of the invention.

According to certain aspects of the disclosure, a seal is described for placement in a slot between two turbine components of a gas turbine to seal a gap between the components. The seal may include a sealing element sized so as to be capable of placement within the slot and of substantially sealing the gap during operation of the gas turbine. A sacrificial coating may be located on the sealing element. The sacrificial coating may be configured with a size substantially conforming to a size of the slot, the sacrificial coating including a material that is removable from the sealing element via heating to a temperature achieved during operation of the gas turbine. Various options and modifications are possible.

According to certain other aspects of the disclosure, a gas turbine assembly may include two turbine components having cooperating outer surfaces defining a gap and a slot therebetween, and a sealing element within the slot for substantially sealing the gap during operation of the gas turbine. A sacrificial coating may be located on the sealing element, configured with a size substantially conforming to a size of the slot. The sacrificial coating may include a material that is removable from the sealing element via heating to a temperature achieved during operation of the gas turbine. As above, various options and modifications are possible.

According to other aspects of the disclosure, a gas turbine includes a compressor section, a combustion section downstream from the compressor section, and a turbine section downstream from the combustion section. At least one of the compressor section, combustion section and the turbine section includes two turbine components having cooperating outer surfaces defining a gap and a slot therebetween, a sealing element within the slot for substantially sealing the gap during operation of the gas turbine, and a sacrificial coating on the sealing element. The sacrificial coating is configured with a size substantially conforming to a size of the slot. The sacrificial coating includes a material that is removable from the sealing element via heating to a temperature achieved during operation of the gas turbine. Options and modifications are possible here as well.

According to certain other aspects of the disclosure, a method of constructing a gas turbine assembly may include providing two turbine components having cooperating outer surfaces defining a gap and a slot therebetween, each of the turbine components defining a respective portion of the slot; placing a seal in a portion of the slot defined by one of the turbine components, the seal including a sealing element sized so as to be capable of substantially sealing the gap during operation of the gas turbine and a sacrificial coating on the sealing element; moving the outer surfaces of the turbine components together so that the seal is also placed in the portion of the slot defined by the other of the turbine components; and operating the gas turbine assembly to remove the sacrificial coating from the sealing element via heating during operation of the gas turbine leaving the sealing element within the slot to seal the gap. Various options and modifications are also possible with the methods disclosed herein.

Various features, aspects and advantages of the various aspects of the present invention will become better understood with reference to the following description and appended claims. The accompanying drawings, which are incorporated in and constitute a part of this specification, illustrate embodiments of the invention and, together with the description, serve to explain the principles of the invention.

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic view of an exemplary gas turbine incorporating aspects of the present disclosure;
FIG. 2 is a side cross-sectional view of a portion of the exemplary turbine of FIG. 1;
FIG. 3 is a simplified perspective exploded view of an assembly including two gas turbine static segments and a sealing element;
FIG. 4 is a perspective view of a sealing element according to certain aspects of the disclosure;
FIG. 5 is a cross-sectional view of the sealing element of FIG. 3;
FIG. 6 is a cross-sectional view of the assembly of FIG. 3, as assembled with full alignment between the segments;
FIG. 7 is a cross-sectional view as in FIG. 6, but with slight misalignment as might occur as segments are moved together during assembly; and
FIG. 8 is a cross-sectional view as in FIG. 6 showing the sealing element in place after the sacrificial coating has been removed.

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. In addition, the terms "upstream" and "downstream" refer to the relative location of components in a fluid pathway. For example, component A is upstream from component B if a fluid flows from component A to component B. Conversely, component B is downstream from component A if component B receives a fluid flow from component A.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

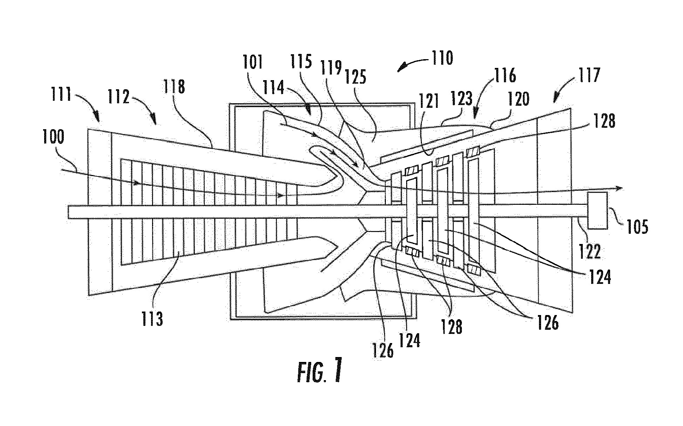

FIG. 1 is a schematic view of an exemplary gas turbine that can incorporate a sealing element according to the present disclosure in various locations. As illustrated, gas turbine 110 includes an inlet section 111, a compressor section 112, a combustion section 114, a turbine section 116, and an exhaust section 117. A shaft (rotor) 122 may be common to compressor section 112 and turbine section 116 and may further connect to a generator 105 for generating electricity.

The compressor section 112 may include an axial flow compressor in which a working fluid 100, such as ambient air, enters the compressor from the inlet section 111 and passes through alternating stages 113 of stationary vanes and rotating blades (shown schematically in Fig. 1). Compressor casing 118 contains the working fluid 100 as the stationary vanes and rotating blades accelerate and redirect the working fluid to produce a continuous flow of compressed working fluid. The majority of the compressed working fluid flows downstream through the combustion section 114 and then the turbine section 116.

The combustion section 114 may include any type of combustor known in the art. A combustor casing 115 may circumferentially surround some or all of the combustion section 114 to direct the compressed working fluid 100 from the compressor section 112 to a combustion chamber 119. Fuel 101 is also supplied to the combustion chamber 119. Possible fuels include, for example, one or more of blast furnace gas, coke oven gas, natural gas, vaporized liquefied natural gas (LNG), hydrogen, and propane. The compressed working fluid 100 mixes with fuel 101 in the combustion chamber 119 where it ignites to generate combustion gases having a high temperature and pressure. The combustion gases then enter the turbine section 116.

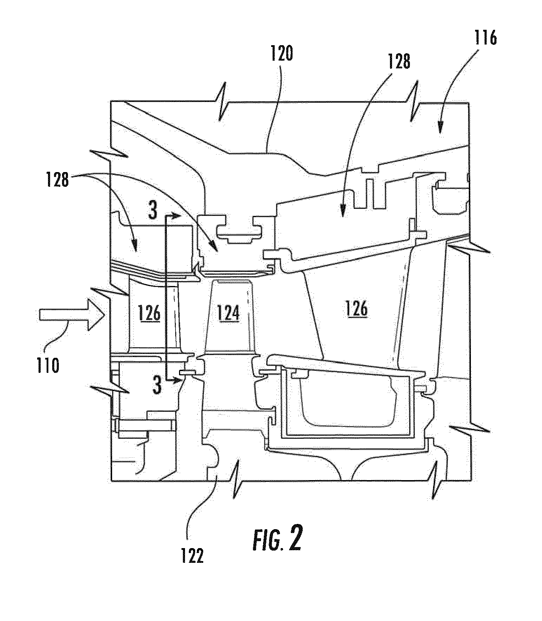

FIG. 2 provides a simplified cross-sectional view of a portion of gas turbine 110. As shown, within turbine section 116, alternating stages of rotating blades (buckets) 124 and stationary blades (nozzles) 126 are attached to rotor 122 and turbine casing 120, respectively. Working fluid 100, such as steam, combustion gases, or air, flows along a hot gas path through gas turbine 110 from left to right as shown in FIG. 2. The first stage of stationary nozzles 126 accelerates and directs the working fluid 100 onto the first stage of rotating blades 124, causing the first stage of rotating blades 124 and rotor 122 to rotate. Working fluid 100 then flows across the second stage of stationary nozzles 126 which accelerates and redirects the working fluid to the next stage of rotating blades (not shown), and the process repeats for each subsequent stage.

As shown in FIG. 2, the radially inward portion of turbine casing 120 may include a series of shroud segments 128 connected to the turbine casing that circumferentially surround and define the hot gas path to reduce the amount of working fluid 100 that bypasses the stationary nozzles 126 or rotating buckets 124. As used herein, the terms "shroud" or "shroud segment" may encompass and include virtually any static or stationary hardware in the hot gas path exposed to the temperatures and pressures associated with working fluid 100. Although in the particular embodiment shown in FIG. 2, shroud segments 128 are located radially outward of the stationary nozzles 126 and rotating buckets 124, the shroud segments may also be located radially inward of the stator nozzles and/or rotating buckets.

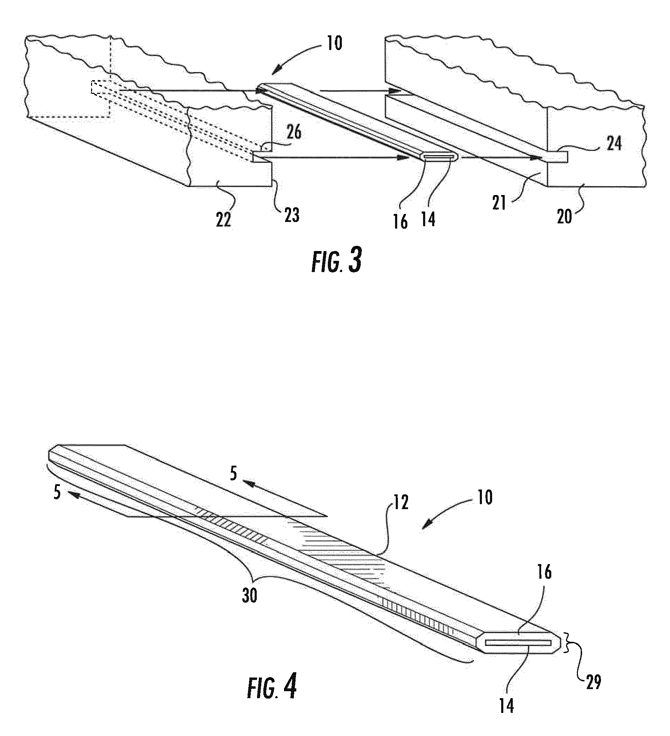

FIG. 3 shows a simplified exploded view of a portion of gas turbine 110 taken along line A-A in FIG. 2. As shown, portions of two mating turbine components 20 and 22 are provided. Turbine components 20 and 22 are assembled together so that surfaces 21 and 23 abut each other. Turbine components 20 and 22 could comprise any abutting static or rotating components of a gas turbine. Accordingly, turbine components 20 and 22 could be shroud segments as described above, and could also be nozzles, vanes, rings, buckets, or other abutting elements in a gas turbine, whether in the turbine section 116, combustion section 114, compressor section 112, etc. Therefore, no limitation is intended by the use of the term "turbine components" herein.

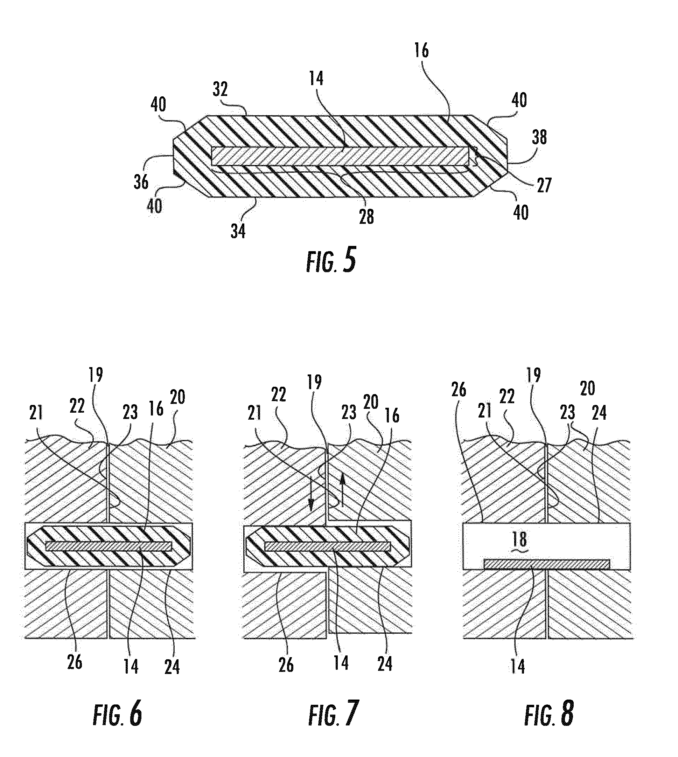

A sealing element 14 is provided to seal the potential leak path between surfaces 21 and 23 of turbine components 20 and 22. Sealing element 14 may be housed in a slot 18 (see FIG. 8) formed from slot portions 24 and 26 formed in turbine components 20 and 22, respectively. The shape and size of slot portions 24 and 26 may vary depending on the application. Slot portions 24 and 26 may therefore be any slot, indent, or groove that extends at least partially into the respective surface 21 or 23. As used herein, the terms "slot", "indent", and "groove" are meant to be interchangeable and encompass or include any channel, crevice, notch, or indent defined in one or both of surfaces 21 or 23 of the turbine components 20 and 22. Slot portions 24 and 26 need not be identical.

Sealing element 14 may be made of a metal, such as high temperature Nickel-based alloys, for example Hastelloy-X, Haynes 188, Waspaloy or L-605. Sealing element 14 could alternatively be made of a ceramic, a very high temperature polymer, a silicate or phyllosilicate mineral (such as mica sheets), or the like. Sealing element 14 have a thickness 27 in the range of about 5 to about 50 mils, and if desired, may have a thickness of about 10 to about 20 mils. Sealing element 14 may have a width 28 of approximately 0.75 inches and a length 30 of approximately 5 inches.

However, the thickness 27, width 28 and length 30 of sealing element 14 are a function of the size of gap 19 to be sealed, as well as size and function of the turbine components 20 and 22, the acceptable gap tolerances for surfaces 21 and 23, the location within a gas turbine of the turbine components, the operational parameters of the gas turbine, etc. Accordingly, the thickness 27, width 28 and length 30 of sealing element 14 may vary, and the sealing element may be configured in various ways within the scope of the invention to suit a particular purpose, slot and/or gap. Similarly, slot 18 and correspondingly slot portions 24 and 26 are sized to receive and hold sealing element 14. In some applications, slot portions 24 and 26 may extend about 0.40 inches inward from surfaces 21 and 23 (for a total slot width of about 0.80 inches). Slot portions 24 and 26 may be about 0.127 inches high, while the gap 19 to be sealed between surfaces 21 and 23 of turbine components 20 and 22 may be between about 0.03 and 0.08 inches. However, these dimensions may vary according to the particular location of the seal.

Sacrificial coating 16 is located on sealing element 14. As shown in FIGS. 3-5, sacrificial coating 16 may substantially surround sealing element 14 in a substantially symmetrical fashion (horizontally, vertically, and/or lengthwise) when viewed in cross section. Sacrificial coating 16 may be applied to sealing element 14 so that seal 10 has a thickness 29 in the range of about 0.05 inches to about 0.15 inches, or more particularly to a range of about 0.075 inches to about 0.125 inches.

In the example of seal 10 shown, sacrificial coating 16 is applied to all external surfaces of the body 12 (e.g., a top surface 32, a bottom surface 34 and two side surfaces 36 and 38). However, in particular embodiments, the sacrificial coating 16 may be applied to select surfaces of the body 12. If desired sacrificial coating 16 may also include chamfers 40 at the intersections of these surfaces to assist orienting seal 10 within slot 18 during assembly. However, it should be understood that sacrificial coating 16 may have other shapes along any dimension of sealing element 14, whether linear or curved. Accordingly, coating 16 need not be uniform across, along or around sealing element 14. Also, coating 16 could be applied to only one side of sealing element 14, or could be applied thicker on one side than on another. If desired, coating 16 may have variations that conform to variations in the shape of slot 18 or gap 19. Sacrificial coating 16 may give seal 10 a thickness and firmness, either overall or only at certain points, substantial enough to hold the seal within one of the slot portions 24 or 26 during assembly, for example by a mild interference/friction fit, and to assist in properly moving turbine components 20 and 22 together without damaging sealing element 14. However, sacrificial coating 16 should be sufficiently soft so that it will yield slightly in case of small misalignments during assembly (see FIG. 7), but without damaging sealing element 14.

Sacrificial coating 16 may be formed of a polymer, a ceramic, or other material that will dissolve, burn, disintegrate, etc., at temperatures and pressures experienced at slot 18 during operation of the gas turbine. Accordingly, during or soon after the initial startup of the gas turbine, sacrificial coating 16 will be removed from slot 18 and will eventually travel out of the turbine section with combustor gases. Sacrificial coating 16 should be selected from a material that will not adversely affect the static or rotating components or other components during gas turbine operation. Accordingly, the sacrificial material could be a polymer, such as PMMA, PEEK, PE, acrylic, polycarbonate, epoxy, etc. To improve strength of the polymer, it could be doped with another material, such as clay, zeolite, aluminum oxide, titanium dioxide, etc. The material used for sacrificial coating 16 may have rigidity at least somewhat equivalent to that of the material used for sealing element 14. In other words, sacrificial coating 16 cannot be a material so soft (e.g., wax, bees wax, etc.) that it does not provide protection to sealing element 14 during assembly. Regardless of what material or materials are used to create sacrificial coating 16, the material(s) should have a glass transition temperature greater than about 150F and should melt and oxidize (or sublime) at temperatures around the compressor discharge temperature (∼800F).

The material forming sacrificial coating 16 may be formed, cast, or polymerized, etc., around a relatively long strip used for multiple sealing elements 14 during manufacture. The combined construct could then be cut to a desired length to create seals 10 for installation. Alternatively, pre-sized sealing elements 14 can be individually supplied with material for sacrificial coating 16.

Sealing element 14 will be present in slot 18 and will seal gap 19 as desired with a thin shim seal upon removal of sacrificial coating 16 (see FIG. 8). The integrity of sealing element 14 will have been protected from damage by sacrificial coating 16 during assembly of the components 20 and 22, thereby optimizing the seal provided by the sealing element during operation and substantially reducing potential for needed replacement of damaged seals during assembly. The sealing element 14 and gap 19 between surfaces 21 and 23 can then more likely approach entitlement leakage levels, as desired.

The present disclosure also is directed to a method of constructing a gas turbine assembly including providing two turbine components 20 and 22 having cooperating outer surfaces 21 and 23 defining a gap 19 and a slot 18 therebetween, each of the turbine components defining a respective portion 24 and 26 of the slot; placing a seal 10 in a portion 24 or 26 of the slot defined by one of the turbine components, the seal including a sealing element 14 sized so as to be capable of substantially sealing the gap during operation of the gas turbine and a sacrificial coating 16 on the sealing element; moving the surfaces 21 and 23 of the turbine components 20 and 22 together so that the seal is also placed in the portion 26 or 24 of the slot 18 defined by the other of the turbine components; and operating the gas turbine assembly to remove the sacrificial coating 16 from the sealing element 14 via heating during operation of the gas turbine leaving the sealing element 14 within the slot 18 to seal the gap 19.

Sealing element 14 can be employed between rotating or static components such as adjacent buckets 124 or blades 126 in a given stage, for example. Alternately, sealing element 14 could be incorporated between any desired components configured for receiving the sealing element, whether in the turbine section 116, combustion section 114, compressor section 112, etc.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A seal for placement in a slot between two turbine components of a gas turbine to seal a gap between the components, the seal comprising:
   a sealing element sized so as to be capable of placement within the slot and of substantially sealing the gap during operation of the gas turbine; and
   a sacrificial coating on the sealing element, the sacrificial coating configured with a size substantially conforming to a size of the slot, the sacrificial coating including a material that is removable from the sealing element via heating to a temperature achieved during operation of the gas turbine.
2. The seal of clause 1, wherein the sealing element is a thin metallic shim element.
3. The seal of any preceding clause, wherein the sealing element includes a Nickel-based alloy.
4. The seal of any preceding clause, wherein the sealing element has a thickness of from about 5 to about 50 mils.
5. The seal of any preceding clause, wherein the sacrificial coating includes a polymer.
6. The seal of any preceding clause, wherein the polymer is doped with a strengthening material.
7. The seal of any preceding clause, wherein the sacrificial coating has a thickness substantially greater than a thickness of the sealing element.
8. The seal of any preceding clause, wherein the sacrificial coating substantially surrounds the sealing element.
9. The seal of any preceding clause, wherein the sealing element has a substantially rectangular cross section.
10. The seal of any preceding clause, wherein the sacrificial coating has an outer surface that is substantially rectangular.
11. The seal of any preceding clause, wherein the sacrificial coating outer surface has chamfered corners configured to assist in aligning the seal in the slot.
12. A gas turbine assembly comprising:
   two turbine components having cooperating outer surfaces defining a gap and a slot therebetween;
   a sealing element within the slot for substantially sealing the gap during operation of the gas turbine; and
   a sacrificial coating on the sealing element, the sacrificial coating configured with a size substantially conforming to a size of the slot, the sacrificial coating including a material that is removable from the sealing element via heating to a temperature achieved during operation of the gas turbine.
13. The gas turbine assembly of any preceding clause, wherein the turbine components each include one of a nozzle, a vane, a shroud, a ring or a bucket.
14. The gas turbine assembly of any preceding clause, wherein the sealing element is a thin metallic shim element.
15. The gas turbine assembly of any preceding clause, wherein the sacrificial coating has a thickness substantially greater than a thickness of the sealing element.
16. The gas turbine assembly of any preceding clause, wherein the sacrificial coating substantially surrounds the sealing element.
17. A gas turbine comprising:
   a compressor section;
   a combustion section downstream from the compressor section; and
   a turbine section downstream from the combustion section, wherein at least one of the compressor section, combustion section and the turbine section includes:
      two turbine components having cooperating outer surfaces defining a gap and a slot therebetween;
      a sealing element within the slot for substantially sealing the gap during operation of the gas turbine; and
      a sacrificial coating on the sealing element, the sacrificial coating configured with a size substantially conforming to a size of the slot, the sacrificial coating including a material that is removable from the sealing element via heating to a temperature achieved during operation of the gas turbine.
18. The gas turbine of any preceding clause, wherein the sealing element is a thin metallic shim element, and wherein the sacrificial coating has a thickness substantially greater than a thickness of the sealing element.
19. The gas turbine of any preceding clause, wherein the sacrificial coating substantially surrounds the sealing element.
20. A method of constructing a gas turbine assembly, the method including:
   providing two turbine components having cooperating outer surfaces defining a gap and a slot therebetween, each of the turbine components defining a respective portion of the slot;
   placing a seal in a portion of the slot defined by one of the turbine components, the seal including a sealing element sized so as to be capable of substantially sealing the gap during operation of the gas turbine and a sacrificial coating on the sealing element;
   moving the outer surfaces of the turbine components together so that the seal is also placed in the portion of the slot defined by the other of the turbine components; and
   operating the gas turbine assembly to remove the sacrificial coating from the sealing element via heating during operation of the gas turbine leaving the sealing element within the slot to seal the gap.
21. The method of any preceding clause, wherein the turbine components each include one of a nozzle, a vane, a shroud, a ring, or a bucket.
22. The method of any preceding clause, wherein the sealing element is a thin metallic shim element.
23. The method of any preceding clause, wherein the sacrificial coating has a thickness substantially greater than a thickness of the sealing element.

## Claims

1. A seal (10) for placement in a slot (18) between two turbine components (20) of a gas turbine (110) to seal a gap (19) between the components (20), the seal (10) comprising:
a sealing element (14) sized so as to be capable of placement within the slot (18) and of substantially sealing the gap (19) during operation of the gas turbine (110); and
a sacrificial coating (16) on the sealing element (14), the sacrificial coating (16) configured with a size substantially conforming to a size of the slot (18), the sacrificial coating (16) including a material that is removable from the sealing element (14) via heating to a temperature achieved during operation of the gas turbine (110).

2. The seal (10) of claim 1, wherein the sealing element (14) is a thin metallic shim element.

3. The seal (10) of any preceding claim, wherein the sealing element (14) includes a Nickel-based alloy.

4. The seal (10) of any preceding claim, wherein the sealing element (14) has a thickness of from about 5 to about 50 mils.

5. The seal (10) of any preceding claim, wherein the sacrificial coating (16) includes a polymer.

6. The seal (10) of claim 5, wherein the polymer is doped with a strengthening material.

7. The seal (10) of any preceding claim, wherein the sacrificial coating (16) has a thickness substantially greater than a thickness of the sealing element (14).

8. The seal (10) of any preceding claim, wherein the sacrificial coating (16) substantially surrounds the sealing element.

9. The seal of any preceding claim, wherein the sealing element (14) has a substantially rectangular cross section.

10. The seal (10) of any preceding claim, wherein the sacrificial coating (16) has an outer surface that is substantially rectangular.

11. The seal (10) of any preceding claim, wherein the sacrificial coating (16) outer surface has chamfered corners configured to assist in aligning the seal (10) in the slot (18).

12. A gas turbine assembly (110) comprising:
two turbine components (20) having cooperating outer surfaces defining a gap (19) and a slot (18) therebetween;
a sealing element ((14) within the slot for substantially sealing the gap (19) during operation of the gas turbine (10); and
a sacrificial coating (16) on the sealing element (14), the sacrificial coating configured with a size substantially conforming to a size of the slot, the sacrificial coating (16) including a material that is removable from the sealing element via heating to a temperature achieved during operation of the gas turbine (110).

13. A method of constructing a gas turbine assembly, the method including:
providing two turbine components (20) having cooperating outer surfaces defining a gap (19) and a slot (18) therebetween, each of the turbine components (20) defining a respective portion of the slot (18);
placing a seal (10) in a portion of the slot (18) defined by one of the turbine components (20), the seal (10) including a sealing element (14) sized so as to be capable of substantially sealing the gap (19) during operation of the gas turbine (110) and a sacrificial coating (16) on the sealing element (14);
moving the outer surfaces of the turbine components (20) together so that the seal (10) is also placed in the portion of the slot (18) defined by the other of the turbine components; and
operating the gas turbine assembly to remove the sacrificial coating (16) from the sealing element (14) via heating during operation of the gas turbine (110) leaving the sealing element within the slot (18) to seal the gap (19).

14. The method of claim 13, wherein the sealing element (14) is a thin metallic shim element.

15. The method of claim 13 or claim 14, wherein the sacrificial coating (16) has a thickness substantially greater than a thickness of the sealing element (14).
